(19) Europäisches Patentamt / European Patent Office / Office européen des brevets

(11) **EP 1 658 522 B1**

(12) **EUROPÄISCHE PATENTSCHRIFT**

(45) Veröffentlichungstag und Bekanntmachung des Hinweises auf die Patenterteilung:
**25.06.2008   Patentblatt 2008/26**

(21) Anmeldenummer: 04764215.2

(22) Anmeldetag: **17.08.2004**

(51) Int Cl.:
**G02C 7/02** (2006.01)

(86) Internationale Anmeldenummer:
**PCT/EP2004/009227**

(87) Internationale Veröffentlichungsnummer:
**WO 2005/029160 (31.03.2005 Gazette 2005/13)**

(54) **FEHLERTOLERANTES PROGRESSIVGLASDESIGN**

ERROR-TOLERANT PROGRESSIVE GLASS DESIGN

CONCEPTION DE VERRE PROGRESSIF A TOLERANCE D'ERREUR

(84) Benannte Vertragsstaaten:
**DE ES FR GB IT**

(30) Priorität: **29.08.2003   DE 10339948**

(43) Veröffentlichungstag der Anmeldung:
**24.05.2006   Patentblatt 2006/21**

(73) Patentinhaber: **Rodenstock GmbH**
**80469 München (DE)**

(72) Erfinder:
 • **ALTHEIMER, Helmut**
  **87650 Baisweil-Lauchdorf (DE)**
 • **ESSER, Gregor**
  **81735 München (DE)**
 • **WELK, Andrea**
  **81547 München (DE)**
 • **SCHMID, Leonhard**
  **82399 Raisting (DE)**
 • **ZIMMERMANN, Martin**
  **85253 Erdweg-Kleinberghofen (DE)**

 • **SCHMID, Kerstin**
  **82256 Fürstenfeldbruck (DE)**
 • **AWRATH, Norbert**
  **94447 Plattling (DE)**
 • **BROSIG, Jochen**
  **85646 Anzing (DE)**
 • **NIKOLAUS, Winfried**
  **85540 Haar (DE)**
 • **MÜLLER, Werner**
  **75443 Ötisheim (DE)**
 • **SCHWARZ, Ilka**
  **82538 Geretsried (DE)**

(74) Vertreter: **Müller-Boré & Partner**
 **Patentanwälte**
 **Grafinger Strasse 2**
 **81671 München (DE)**

(56) Entgegenhaltungen:
 **EP-A- 0 911 670          WO-A-01/81981**

**Beschreibung**

Die Erfindung betrifft ein Verfahren zur Herstellung eines progressiven Brillenglases.

Progressive Brillengläser zeichnen sich dadurch aus, daß sie einen als Fembereich bezeichneten Bereich zum Sehen in die Ferne und einen als Nahbereich bezeichneten Bereich zum Sehen in die Nähe aufweisen, welche durch eine sogenannte Progressionszone miteinander verbunden sind. In der Progressionszone steigt die Wirkung des Brillenglases von dem Wert des im Fembereich gelegenen Fembezugspunkt $B_F$ auf den Wert des im Nahbereich gelegenen Nahbezugspunkt $B_N$ längs einer gewundenen Linie, welche als Hauptlinie bezeichnet wird, an. Die Wirkungsdifferenz zwischen Fern- und Nahbezugspunkt wird als Addition bezeichnet.

In der Regel ist der Fernbereich im oberen und der Nahbereich im unteren Bereich in Gebrauchsstellung des Brillenglases angeordnet. Derartige progressive Brillengläser sind im Stand der Technik wohl bekannt, wobei lediglich exemplarisch auf die internationale Patentanmeldung WO 01/81981 der Rodenstock GmbH, München, verwiesen wird.

In der Regel weisen solche progressiven Brillengläser neben dem eingangs erwähnten Fern- und Nahbezugspunkt ferner einen Prismenbezugs- und einen Zentrierpunkt auf. Zur Terminologie und Definition wird hierbei auf die oben genannte WO 01/81981 verwiesen, wobei Fern-, Nah- und Prismenbezugspunkt und Zentrierpunkt die allgemein üblichen Bezeichnungen darstellen, wie sie auch in der EN Norm ISO 13666 verwendet werden. Im Fembezugspunkt $B_F$ wird die Fernwirkung, d.h. die sphärische und/oder zylindrische Wirkung des Brillenglases erreicht. Im Nahbezugspunkt $B_N$ wird die Nahwirkung, d.h. die Femwirkung plus Addition erreicht. Im Prismenbezugspunkt wird die prismatische Wirkung, d.h. das verordnete Prisma und Dickenreduktionsprisma, erreicht.

Der Zentrierpunkt $B_Z$ wird zur Zentrierung des Brillenglases benutzt und stellt somit denjenigen Punkt dar, welcher die örtliche Lage des Brillenglases bezüglich des Auges festlegt. Ein progressives Brillenglas wird in der Regel derart vor dem Auge zentriert, daß bei normaler Kopf- und Körperhaltung das Brillenglas bei sogenannter Nullblickrichtung (d.h. bei horizontalem Blick) so vor dem Auge positioniert ist, daß der Zentrierpunkt vor der Pupillenmitte des Auges liegt.

In der Patentliteratur werden teilweise andere Begriffe für die gleichen Punkte verwendet. So werden in der EP 0 911 670 B1 die Begriffe Referenzpunkt für die Fernsicht, Referenzpunkt für die Nahsicht und Montagekreuz verwendet. Diese Begriffe haben allerdings die gleiche Bedeutung.

In der Regel und für die Zwecke dieser Anmeldung weisen die Bezugspunkte folgende Höhen in Vertikalschnitten durch das Brillenglas, d.h. y-Koordinaten bei Projektion auf eine xy-Ebene, auf: Fernbezugspunkt $B_F$ y = 8 mm, Zentrierpunkt $B_Z$ y = 4 mm, Prismenbezugspunkt y = 0 mm und Nahbezugspunkt $B_N$ y = -14 mm. Als Nullpunkt dient hierbei die sogenannte Glashorizontale H, deren räumliche Lage und Richtung zumeist durch Permanentmarkierungen, welche sich typischerweise im Abstand von 17 mm seitlich des Hauptmeridians befinden, bestimmt wird. In der Mitte zwischen den Permanentmarkierungen auf der Glashorizontalen liegt der Glasmittelpunkt, welcher in den meisten Fällen (nicht vordezentrierte Gläser) der geometrische Mittelpunkt der Fläche des ungerandeten Glases ist. Der Glasmittelpunkt fällt hierbei mit dem Prismenbezugspunkt zusammen.

Untersuchungen haben gezeigt, daß die Hauptblickrichtung in der Regel von der Nullblickrichtung abweicht, und zwar um 5 bis 10 Grad nach unten. Dies entspricht in etwa einer y-Koordinate von 2 mm bis -1 mm. Die Hauptsehaufgabe liegt wiederum in der Regel in der Ferne.

Deshalb ist schon in der internationalen Patentanmeldung WO 01/81981 der Rodenstock GmbH erkannt worden, daß es von Vorteil ist, wenn der Brechwert nicht direkt unterhalb des Fembezugspunkts $B_F$, wie sonst oftmals üblich, sondern erst später beginnt anzusteigen. Somit ist es mit diesem bekannten Brillenglas möglich, auch in der Hauptblickrichtung, unter Umständen unter Ausnutzung der Tiefenschärfe, noch in die Ferne zu sehen. Bei anderen herkömmlichen progressiven Brillengläsern, wie beispielsweise den Ausführungsbeispielen der EP 0 911.670, ist dies in der Regel nicht mehr möglich. Bei der genannten Druckschrift (vgl. Figs. 6 und 9) liegt in Hauptblickrichtung bereits eine Nebelung von 0,3 dpt vor, was nur bei besten Lichtverhältnissen und Kontrast durch die Tiefenschärfe (ca. +/-0,3 dpt) ausgeglichen werden kann.

Glücklicherweise weist das menschliche Auge nur eine kleine Blende auf, welche zwischen 2 und 7 mm variiert. Da das menschliche Auge aber selbst schon größere Fehler höherer Ordnung aufweist, hat das menschliche visuelle System der körperlichen noch eine "sensorische Blende" überlagert. Dieses Phänomen, welches als Stiles-Crawford-Effekt bekannt ist, wird dadurch hervorgerufen, daß die Zapfen - wie Lichtleiter - auf die Pupillenmitte ausgerichtet sind und somit für Strahlen, die von dort kommen, deutlich empfindlicher sind. Somit ergibt sich eine wirksame Pupillenöffnung von lediglich 2 bis 5 mm.

Aufgabe der Erfindung ist es, ein Verfahren zur Herstellung eines progressiven Brillenglases anzugeben, welches unter Berücksichtigung des typischen Bestell- und Herstellungsablaufs regelmäßig zu einem progressiven Brillenglas führt, welches verbesserte optische Abbildungseigenschaften für den bestellenden Kunden aufweist und insbesondere unempfindlicher gegenüber Refraktionsfehlern, insbesondere positiven Refraktionsfehlern, ist.

Diese Aufgabe wird durch ein Verfahren mit den in Anspruch 1 angegebenen Merkmalen gelöst. Bevorzugte Ausführungsvarianten sind Gegenstand der abhängigen Ansprüche.

Gemäß der Erfindung umfaßt ein Verfahren zur Herstellung eines progressiven Brillenglases folgende Schritte:

- Vorgeben eines Bestellwertes für den mittleren Gebrauchswert im Fernbezugspunkt $B_F$ des progressiven Brillenglases;
- Berechnen des progressiven Brillenglases unter Berücksichtigung eines Berechnungswertes des mittleren Gebrauchswertes in dem Fernbezugspunkt $B_F$, wobei der Berechnungswert gegenüber dem Bestellwert in dem Fernbezugspunkt $B_F$ eine negative Sollrefraktionsabweichung zwischen 0,03 dpt und 0,2 dpt aufweist; und
- Herstellen des berechneten progressiven Brillenglases.

Vorzugsweise liegt die negative Sollrefraktionsabweichung zwischen 0,08 dpt und 0,12 dpt. Bei dem erfindungsgemäßen Verfahren zur Herstellung eines progressiven Brillenglases wird bei der Berechnung des progressiven Brillenglases somit nicht von dem Bestellwert des mittleren Gebrauchswerts im Fernbezugppunkt $B_F$ ausgegangen, sondern von einem sogenannten Berechnungswert, welcher gegenüber dem Bestellwert eine negative Sollrefraktionsabweichung aufweist. Mit anderen Worten wird bei der Berechnung und Optimierung des progressiven Brillenglases nicht der dem Brillenträger verschriebene Bestellwert des mittleren Gebrauchswerts im Fernbezugspunkt $B_F$ angesetzt, sondern ein davon abweichender Berechnungswert, welcher um eine vorbestimmte Sollrefraktionsabweichung gegenüber dem Bestellwert verkleinert ist. Der Berechnungs- und Optimierungsschritt erfolgt somit auf Grundlage bzw. auf Basis eines mittleren Gebrauchswerts im Fernbezugspunkt $B_F$, welcher nicht mit dem verordneten mittleren Gebrauchswert übereinstimmt.

Überraschenderweise führt jedoch genau diese Einführung eines negativen Sollrefraktionsfehlers im Fernbezugspunkt $B_F$ in dem Berechnungsschritt regelmäßig zu einem progressiven Brillenglas, welches unter Berücksichtigung des typischen Bestell- und Herstellungsprozesses bessere optische Abbildungseigenschaften für den Brillenträger aufweist. Das erhaltene erfindungsgemäße progressive Brillenglas erweist sich unempfindlicher gegenüber kleinen Refraktionsfehlem, insbesondere positiven Refraktionsabweichungen.

Unter dem mittleren Gebrauchswert D wird im Sinne dieser Erfindung der Mittelwert der Kehrwerte der bildseitigen Schnittweiten S'1 und S'2 minus der Objektentfernung, also der objektseitigen Schnittweite S verstanden, wobei

$$D = \frac{S'1 + S'2}{2} - S$$

gilt.

Mit anderen Worten wird gemäß dem erfindungsgemäßen Herstellungsverfahren der der Berechnung bzw. Optimierung zugrundeliegende Berechnungswert gegenüber dem Bestellwert der Brechkraft in Gebrauchsstellung im Fernbezugspunkt $B_F$ des progressiven Brillenglases um eine vorbestimmte, negative Sollrefraktionsabweichung zwischen 0,03 dpt und 0,2 dpt abgesenkt. Somit wird bei dem Berechnungs- bzw. Optimierungsschritt von einem Berechnungswert des mittleren Gebrauchswerts ausgegangen, welcher nominell für den bestellenden Brillenträger mit einem negativen Sollrefraktionsfehler vorbestimmter Größe behaftet ist. Die Brechwertverteilung, von welcher in dem Berechnungs- und Optimierungsschritt ausgegangen wird, kann beispielsweise eine derartige wie in WO 01/81981 sein.

Eine detaillierte Erläuterung der der Erfindung zugrundeliegenden Erkenntnisse und Beweggründe sowie beispielshafte Ausführungen des erfindungsgemäßen Konzepts werden später angegeben.

Gemäß einer bevorzugten Ausführungsform des erfindungsgemäßen Verfahrens erfolgt der Schritt des Berechnens des progressiven Brillenglases unter Berücksichtigung einer Berechnungsaddition, welche zumindest um den Betrag der negativen Sollrefraktionsabweichung in dem Fembezugspunkt gegenüber der Bestelladdition erhöht ist. Somit ist der mittlere Gebrauchswert (bzw. der Brechwert in Gebrauchsstellung) im Nahbezugspunkt $B_N$, von welchem bei dem Berechnungs-und Optimierungsschritt ausgegangen wird, beispielsweise gleich dem verordneten bzw. bestellten mittleren Gebrauchswert im Nahbezugspunkt $B_N$. Hierzu wird die dem Berechnungsschritt zugrundliegende Berechnungsaddition zumindest um denjenigen Betrag erhöht, um welchen die Wirkung im Fernbezugspunkt nominell abgesenkt wurde.

Gemäß einer besonders bevorzugten Ausführungsform des erfindungsgemäßen Verfahrens ist die Berechnungsaddition gegenüber der Bestelladdition um die Summe

- des Betrags der negativen Sollrefraktionsabweichung in dem Fembezugspunkt $B_F$ und
- einer positiven Sollrefraktionsabweichung zwischen 0,02 dpt bis O,1 dpt, vorzugsweise 0,05 dpt,

erhöht.

Somit erfolgt der Berechnungschritt des progressiven Brillenglases auf Grundlage von (Berechnungs-)Brechwerten in Gebrauchsstellung, welche sich sowohl im Fernals auch im Nahbezugspunkt von den verordneten (Bestell-) Werten unterscheiden. So liegt gegenüber den Bestellwerten im Fernbezugspunkt nominell eine negative Refraktionabweichung und im Nahbezugspunkt nominell eine positive Refraktionsabweichung vor.

Die Erkenntnisse und Beweggründe, welche der erfindungsgemäßen Einführung von Sollrefraktionsabweichungen im Berechnungsschritt zugrundeliegen, werden später im einzelnen erläutert.

Vorzugsweise erfolgt der Schritt des Berechnens des progressiven Brillenglases unter Berücksichtigung eines vorbestimmten Sollrefraktionsfehlers auf der Hauptlinie als Funktion der y-Koordinate entlang eines Vertikalschnitts des Brillenglases. Somit erfolgt gemäß dieser besonders bevorzugten Ausführungsvariante die Berechnung des progressiven Brillenglases unter Berücksichtigung eines vorbestimmten Sollrefraktionsfehlers entlang der Hauptlinie bzw. des Hauptmeridians des Brillenglases, wobei der Sollrefraktionsfehler eine Funktion von y (d.h. der Vertikal- bzw. Höhenachse) ist. Der vorbestimmte Sollrefraktionsfehler wird dabei bevorzugt derart angesetzt, daß sich im Fernbezugspunkt für den Berechnungswert des mittleren Gebrauchswerts eine negative Sollrefraktionsabweichung gegenüber dem entsprechenden Bestellwert und im Nahbezugspunkt eine positive Sollrefraktionsabweichung des Berechnungswerts gegenüber dem entsprechenden Bestellwert ergibt. Besonders bevorzugt wird bei einer derartigen Berechnung bzw. Optimierung eine sogenannte Doppelasymptotenfunktion für den Sollrefraktionfehler als Funktion von y der Form:

$$f(y) = b + a - \frac{a}{\left(1 + e^{c(y+d)}\right)^m} + \sum_i g_i y^i$$

verwendet, wobei a, b, c, d, m und $g_i$ Konstanten sind. Die Konstanten können beispielsweise die Werte a=0,125 dpt, b=-0,125dpt, c=-0,5dpt, d=1 mm, rn=1,3, i=0 annehmen. Gleichermaßen ist es möglich, kubische oder höhergradige Splinefunktionen oder andere geeignete Funktionen zu verwenden.

Vorzugsweise erfolgt der Schritt des Berechnens des progressiven Brillenglases derart, daß der mittlere Gebrauchswert des hergestellten Brillenglases bei horizontaler Blickauslenkung im Fernbereich möglichst wenig zunimmt. Vorzugsweise nimmt der mittlere Gebrauchswert des hergestellten Brillenglases auf Höhe des Fernbezugspunktes bei horizontaler Blickauslenkung um weniger als 0,25 dpt, bevorzugt weniger als 0,15 dpt, gegenüber dem mittleren Gebrauchswert im Fernbezugspunkt zu. Insbesondere kann der Berechnungsschritt derart ausgeführt werden, daß der Fernbereich bei Überlagerung mit einem (zusätzlichen) Refraktionsfehler (beispielsweise aufgrund von Herstellungsschwankungen) von +0,2 dpt um höchstens 5% verkleinert wird, vorzugsweise um höchstens 3%.

Die Erfindung lässt sich insbesondere anwenden auf ein progressives Brillenglas mit einem Femteil mit einem Fernbezugspunkt, einem Nahteil und einer Progressionszone, wobei das progressive Brillenglas derart ausgelegt ist, daß seine Berechnung unter Berücksichtigung eines Berechnungswertes des mittleren Gebrauchswertes in dem Fembezugspunkt erfolgt, wobei der Berechnungswert gegenüber einem vorgegebenen Bestellwert des mittleren Gebrauchswerts in dem Fembezugspunkt eine negative Sollrefraktionsabweichung zwischen 0,03 dpt und 0,2 dpt aufweist.

Vorzugsweise liegt die negative Refraktionsabweichung zwischen 0,08 dpt und 0,12 dpt. Vorzugsweise ist das progressive Brillenglas derart ausgelegt, daß seine Berechnung unter Berücksichtigung einer Berechnungsaddition erfolgt, welche zumindest um den Betrag der negativen Sollrefraktionsabweichung in dem Fembezugspunkt gegenüber der Bestelladdition erhöht ist.

Vorzugsweise ist die Berechnungsaddition gegenüber der Bestelladdition um die Summe

• des Betrags der negativen Sollrefraktionsabweichung in dem Fernbezugspunkt und
• einer positiven Sollrefraktionsabweichung zwischen 0,02 dpt bis 0,1 dpt

erhöht.

Die Erfindung lässt sich insbesondere anwenden auf ein progressives Brillenglas mit einem Femteil, einem Nahteil und einer Progressionszone, wobei das progressive Brillenglas derart ausgelegt ist, daß der Fembereich bei Überlagerung mit einem Refraktionsfehler von +0,2 dpt um höchstens 5%, bevorzugt um höchstens 3% verkleinert wird.

Die Erfindung wird im folgenden unter Bezugnahme auf begleitende Zeichnung bevorzugter Ausführungsformen beispielhaft beschrieben. Es zeigt:

Tabelle 1 die Brechwerte in Gebrauchsstellung im Fembezugspunkt $B_F$, Zentrierpunkt $B_Z$ und Nahbezugspunkt $B_N$ für die Additionen 1,0, 2,0 und 3,0 dpt und den sphärischen Wirkungen Sph -4,0, -1,0, 2,0 und 5,0 dpt bei einer unendlich kleinen Pupillenöffnung;

Tabelle 2 den Brechwert in Gebrauchsstellung im Fembezugspunkt $B_F$, Zentrierpunkt $B_Z$ und Nahbezugspunkt $B_N$ für die Additionen 1,0, 2,0 und 3,0 dpt und den sphärischen Wirkungen Sph -1,0 und 2,0 dpt bei einer Pupillenöffnung von 3,5 mm;

Tabelle 3    Brechwert in Gebrauchsstellung im Fernbezugspunkt $B_F$, Zentrierpunkt $B_Z$ und Nahbezugspunkt $B_N$ für die Addition 1,0, 2,0 und 3,0 dpt und den sphärischen Wirkungen Sph -4,0, -1,0, 2,0 und 5,0 dpt bei einer Pupillenöffnung von 6 mm;

Figur 1    die Brechwertverteilung eines herkömmlichen progressiven Brillenglases (Fig. 1 a) und eines bevorzugten, gemäß der Erfindung hergestellten Brillenglases (Fig. 1b) jeweils in Gebrauchsstellung;

Figur 2    die Astigmatismusverteilung des herkömmlichen progressiven Brillenglases (Fig. 2a) und des bevorzugten, gemäß der Erfindung hergestellten Brillenglases (Fig. 2b) der in Fig. 1 dargestellen Brillengläser jeweils in Gebrauchsstellung;

Figur 3    die Verteilung der relativen Sehschärfenminderung durch die Abbildungsfehler (astigmatische Abweichung und Refraktionsabweichung) des herkömmlichen (Fig. 3a) und des bevorzugten erfindungsgemäßen (Fig. 3b) progressiven Brillenglases;

Figur 4    die Verteilung der relativen Sehschärfenminderung durch die Abbildungsfehler des herkömmlichen (Fig. 4a) und des bevorzugten erfindungsgemäßen (Fig. 4b) progressiven Brillenglases, wenn ein zusätzlicher Refraktionsfehler von -0,2 dpt auftritt;

Figur 5    die Verteilung der relativen Sehschärfenminderung durch die Abbildungsfehler des herkömmlichen (Fig. 5a) und des bevorzugten erfindungsgemäßen (Fig. 5b) progressiven Brillenglases, wenn ein zusätzlicher Refraktionsfehler von +0,2 dpt auftritt;

Figur 6a    die Pfeilhöhen des bevorzugten erfindungsgemäßen Brillenglases gemäß Figuren 1 bis 5;

Figur 6b    die mittleren Flächenbrechwert des bevorzugten erfindungsgemäßen Brillenglases gemäß Figuren 1 bis 5;

Figur 6c    den Flächenastigmatismus des bevorzugten erfindungsgemäßen Brillenglases gemäß Figuren 1 bis 5;

Figur 7    die Abweichung des Brechwertes in Gebrauchsstellung als Funktion des Pupillendurchmessers für die Wirkung Sph = -1,0 dpt und den Additionen 1, 2 und 3 dpt im Fernbezugspunkt;

Figur 8    die Abweichung des Brechwertes in Gebrauchsstellung als Funktion des Pupillendurchmessers für die Wirkung Sph = -1,0 dpt und den Additionen 1, 2 und 3 dpt im Zentrierpunkt;

Figur 9    die Abweichung des Brechwertes in Gebrauchsstellung als Funktion des Pupillendurchmessers für die Wirkung Sph = -1,0 dpt und den Additionen 1, 2 und 3 dpt im Nahbezugspunkt;

Figur 10    die Abweichung des Brechwertes in Gebrauchsstellung als Funktion des Pupillendurchmessers für die Wirkung Sph = +2,0 dpt und den Additionen 1, 2 und 3 dpt im Fernbezugspunkt;

**Figur 11**    die Abweichung des Brechwertes in Gebrauchsstellung als Funktion des Pupillendurchmessers für die Wirkung Sph = +2,0 dpt und den Additionen 1, 2 und 3 dpt im Zentrierpunkt;

Figur 12    die Abweichung des Brechwertes in Gebrauchsstellung als Funktion des Pupillendurchmessers für die Wirkung Sph = +2,0 dpt und den Additionen 1, 2 und 3 dpt im Nahbezugspunkt;

Gemäß dem oben dargestellten bevorzugten erfindungsgemäßen Verfahren zur Herstellung eines progressiven Brillenglases erfolgt der Berechnungs- und Optimierungsschritt des progressiven Brillenglases auf Basis von Berechnungswerten für den mittleren Gebrauchswert im Fernbezugspunkt und Nahbezugspunkt, welche sich jeweils gezielt von den entsprechenden Bestellwerten bzw. verordneten Werten unterscheiden. So wird gemäß einem bevorzugten erfindungsgemäßen Verfahren der Berechnungswert für den Brechwert in Gebrauchsstellung im Fernbezugspunkt um eine vorbestimmte negative Sollrefraktionsabweichung gegenüber dem betreffenden Bestellwert gesenkt und die der Berechnung zugrundeliegende Berechnungsaddition gegenüber der verordneten Addition (Bestelladdition) um zumindest den gleichen Betrag erhöht. Vorzugsweise wird die Berechnungsaddition sogar derart gegenüber der Bestelladdition erhöht, daß eine positive Sollrefraktionsabweichung des Brechwerts in Gebrauchsstellung im Nahbezugspunkt gegenüber dem entsprechenden Bestellbrechwert der Berechnung des progressiven Brillenglases zugrunde gelegt wird.

Obwohl die Berechnung und Optimierung des progressiven Brillenglases somit auf Basis bzw. Grundlage von Berechnungswerten des mittleren Gebrauchswerts im Fern- und Nahbezugspunkt erfolgt, welche sich von den verordneten Bestellwerten unterscheiden, wird überraschenderweise gemäß diesem bevorzugten erfindungsgemäßen Verfahren ein progressives Brillenglas erhalten, welches regelmäßig verbesserte optische Eigenschaften für den Brillenträger und insbesondere eine geringere Empfindlichkeit gegenüber kleinen zusätzlichen Refraktionsabweichungen aufweist.

Im folgenden werden einige der wesentlichen Erkenntnisse und Beweggründe, welcher dieser Erfindung zugrundeliegen, dargestellt.

Der Erfindung liegt zum einen die an sich bekannte Erkenntnis zugrunde, daß der Brechwert in Gebrauchsstellung (bzw. der mittlere Gebrauchswert) eines progressiven Brillenglases von der Pupillenöffnung des sehenden Auges abhängt. Dieser prinzipille Zusammenhang ist in den Tabellen 1 bis 3 exemplarisch veranschaulicht.

**Tabelle 1** zeigt den Brechwert in Gebrauchsstellung im Fernbezugspunkt $B_F$, Zentrierpunkt $B_Z$ und Nahbezugspunkt $B_N$ für die Addition Add 1,0, 2,0 und 3,0 dpt und die sphärischen Wirkungen Sph -4,0, -1,0, 2,0 und 5,0 dpt bei unendlich kleiner Pupillenöffnung für ein herkömmliches progressives Brillenglas. Die sphärische Wirkung Sph ist hierbei in den Zeilen der Tabelle und die Additionen Add in den Spalten der Tabelle konstant. **Tabelle 2** zeigt den Brechwert in Gebrauchsstellung in den angegebenen Bezugspunkten für die Additionen Add 1,0, 2,0 und 3,0 dpt und den sphärischen Wirkungen Sph -1,0 und 2,0 dpt bei einer Pupillenöffnung von 3,5 mm. **Tabelle 3** zeigt schließlich den Brechwert in Gebrauchsstellung in den genannten Bezugspunkten für die Additionen 1,0, 2,0 und 3,0 und den sphärischen Wirkungen Sph von -4,0, -1,0, 2,0 und 5,0 bei einer Pupillenöffnung von 6 mm.

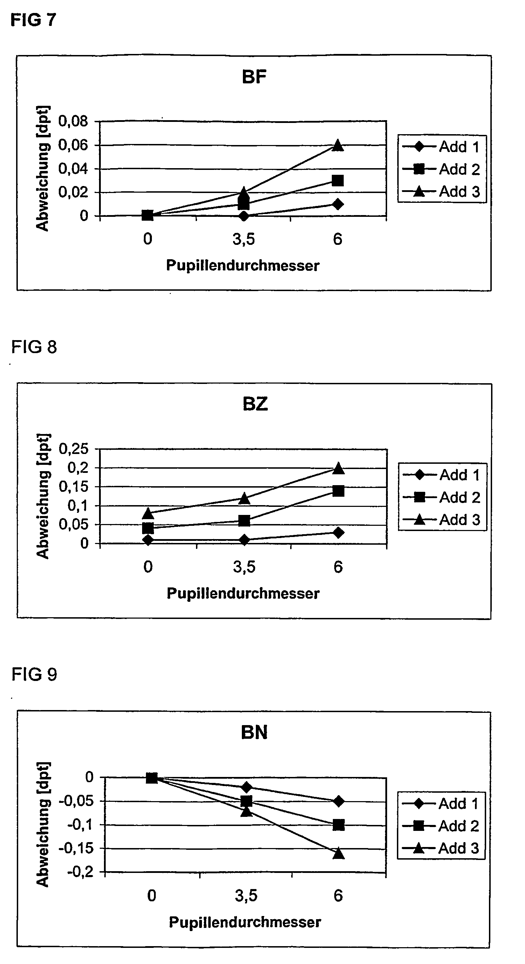

Der entsprechende Zusammenhang ist nochmals in den **Figs. 7** bis **12** in graphischer Form dargestellt. Figs. 7 bis 12 zeigen die Abweichung des Brechwerts in Gebrauchsstellung als Funktion des Pupillendurchmessers des sehenden Auges für unterschiedliche Additionen in den jeweils angegebenen Bezugspunkten bei vorgegebener sphärischer Wirkung. In Figs. 7 bis 9 beträgt die sphärische Wirkung - 1,0 dpt und die angegebenen Additionen Add betragen - wie in den jeweiligen Insets dargestellt ist -1, 2 und 3 dpt.

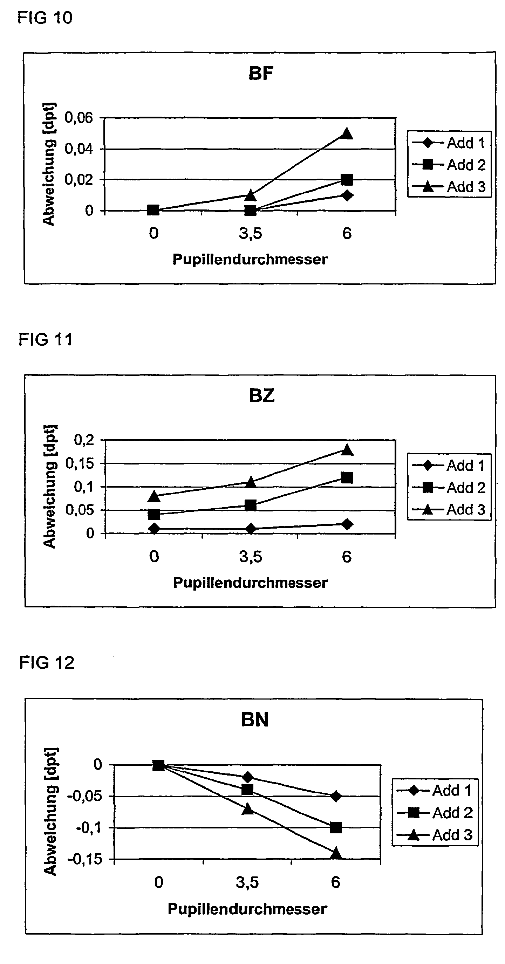

**Fig. 7** zeigt die Abhängigkeit der Abweichung des Brechwerts in Gebrauchsstellung vom Pupillendurchmesser im Fernbezugspunkt $B_F$, **Fig. 8** im Zentrierpunkt $B_Z$ und **Fig. 9** im Nahbezugspunkt $B_N$. Die **Figs. 10** bis **12** entsprechen den jeweiligen Figs. 7 bis 9 in allen entsprechenden Werten, bis auf die sphärische Wirkung, welche in den Figs. 10 bis 12 jeweils +2,0 dpt beträgt.

Aus den Tabellen 1 bis 3 sowie den Figs. 7 bis 12 ist ersichtlich, daß bei progressiven Brillengläsern der Brechwert in Gebrauchsstellung mit Zunahme der Pupillenöffnung im Fembezugspunkt sowie im Zentrierpunkt zunimmt, während er im Nahbezugspunkt abnimmt. Während bei geringen Pupillendurchmessern, d.h. bei optimalen Licht- und Kontrastverhältnissen, die Abweichung der Brechwerte in Gebrauchsstellung sehr gering ausfällt, sind bei geöffneten Pupillen (Pupillendurchmesser = 6 mm) erhebliche Abweichungen der Brechwerte zu verzeichnen. Diese Abweichungen aufgrund der Abhängigkeit des mittleren Gebrauchswerts von dem Pupillendurchmesser führen bei großen Pupillendurchmessern dazu, daß der Brechwert in Gebrauchsstellung im Fern- und Zentrierpunkt einen positiven Refraktionsfehler und im Nahbezugspunkt einen negativen Refraktionsfehler aufweist.

Das Auftreten eines derartigen positiven bzw. negativen Refraktionsfehlers führt bei einer Brechwertverteilung herkömmlicher progressiver Brillengläser jedoch zu schwerwiegenden Problemen, welche die optischen Abbildungseigenschaften beeinträchtigen. Selbst bei modernen progressiven Brillengläsern, welche bereits nach der Lehre der WO 01/91981 und DE 102 50 093.2 konstruiert wurden, führen derartige Refraktionsfehler aufgrund der Abhängigkeit des Brechwerts in Gebrauchsstellung vom Pupillendurchmesser zu Problemen im Hauptdurchblickspunkt, welcher bei Höhen y = -1 bis +2 mm liegt. Derartige Einbußen an optischer Abbildungsqualität treten insbesondere dann auf, wenn die Lichtverhältnisse und der Kontrast schwach sind und daraus eine große Pupillenöffnung resultiert.

Einem derartigen negativen Einfluß begegnet die Erfindung gemäß einer besonders bevorzugten Ausführungsform des erfindungsgemäßen Herstellungsverfahrens dadurch, daß im Berechnungsprozeß des progressiven Brillenglases eine negative Sollrefraktionsabweichung im Fembezugspunkt und eine positive Sollrefraktionsabweichung im Nahbezugspunkt eingeführt wird. Eine derartige, gezielt eingeführte Sollrefraktionsabweichung führt dazu, daß ein entsprechend hergestelltes progressives Brillenglas auch bei großen Pupillenöffnungen signifikant verbesserte optische Abbildungseigenschaften für den Brillenträger aufweist.

Die Erfindung beruht weiterhin auf der Erkenntnis, daß sich positive Refraktionsfehler (Nebelungen) weitaus kritischer auf die optischen Abbildungseigenschaften auswirken, als negative Refraktionsfehler. Ursache hiefür ist, daß positive Fehler nur durch die Tiefenschärfe zu kompensieren sind. Die Tiefenschärfe nimmt jedoch mit Zunahme der Pupillenöffnung stark ab.

Negative Abweichungen hingegen können neben der Tiefenschärfe zusätzlich noch durch die Akkommodation ausgeglichen werden. Diese nimmt zwar mit dem Alter des Brillenträgers ab und ist auch der Grund, warum ein progressives Brillenglas benötigt wird. Jedoch gilt als Faustregel, daß das Restakkommodationsvermögen etwa 3 dpt minus der Addition beträgt, so daß bis zur Addition von 3 dpt noch ein ausreichendes Akkommodationsvermögen vorhanden ist, um kleine negative Refraktionsfehler auszugleichen. Weiterhin hat der Progressivbrillenglasträger die Möglichkeit, durch Blicksenkung und der damit verbundenen Brechwertzunahme kleine negative Fehler auszugleichen. Bei positiven Refraktionsfehlem ist dies nicht möglich.

Ferner macht sich die Erfindung die Erkenntnis zueigen, daß positive Fehler nicht nur kritischer sind, sondern auch noch häufiger auftreten. Ursache hierfür ist insbesondere die Refraktionsbestimmung zur Ermittelung der Rezept- bzw. Bestellwerte. Die Refraktionsbestimmung wird in der Regel in einem Raum mit einer Sehprobenentfernung von 5 bis 6 m durchgeführt. Dadurch, daß sich die Sehprobe nicht im Unendlichen sondern in endlicher Entfernung befindet, ergibt sich ein positiver Refraktionsfehler von ca. 0,15 bis 0,2 dpt. Eine vollständige Refraktionsbestimmung beinhaltet zwar die Prüfung auf unendlich, jedoch wird dies oftmals oder in der Regel nicht durchgeführt und somit bleibt dieser Fehler bestehen.

Da die Refraktion nur auf +/- 0,12 dpt genau bestimmt werden kann, hat man eine Unsicherheit von ca. - 0,1 bis + 0,25 dpt.

Schließlich sind Fertigungsabweichungen bei der Herstellung des progressiven Brillenglases, die dem vorangegangenen Fehlern überlagert sind, unvermeidlich. Auch diese gehen im Fernbereich tendenziell eher Richtung positiver Refraktionsfehler.

Durch die beschriebene Ausführungsvariante eines erfindungsgemäßen Herstellungsverfahrens läßt sich ein progressives Brillenglas herstellen, welches nominell im Fernbezugspunkt einen negativen Refraktionsfehler und im Nahbezugspunkt einen positiven Refraktionsfehler aufweist. Damit wird einerseits die Brechwertzu- bzw. abnahme bei Zunahme der Pupillenöffnung berücksichtigt und andererseits wird das Design unempfindlicher gegenüber kleinen Refraktionsabweichungen.

Weiterhin besteht natürlich die Möglichkeit, die Brechwertverteilung in der Peripherie des Brillenglases so zu steuern, daß der Brechwert in der Ferne bei seitlichen Blickauslenkungen nur geringfügig zunimmt. Dadurch kommt es nicht so schnell zu einer Nebelung bei seitlichen Blickauslenkungen.

Im folgenden wird ein gemäß einem bevorzugten erfindungsgemäßen Herstellungsverfahren hergestelltes progressives Brillenglas im Vergleich mit einem entsprechenden herkömmlichen Brillenglas beispielhaft beschrieben.

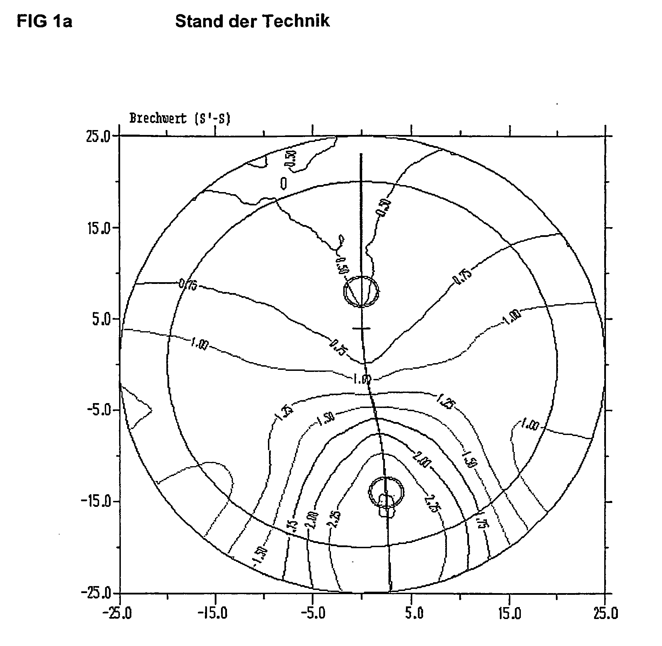

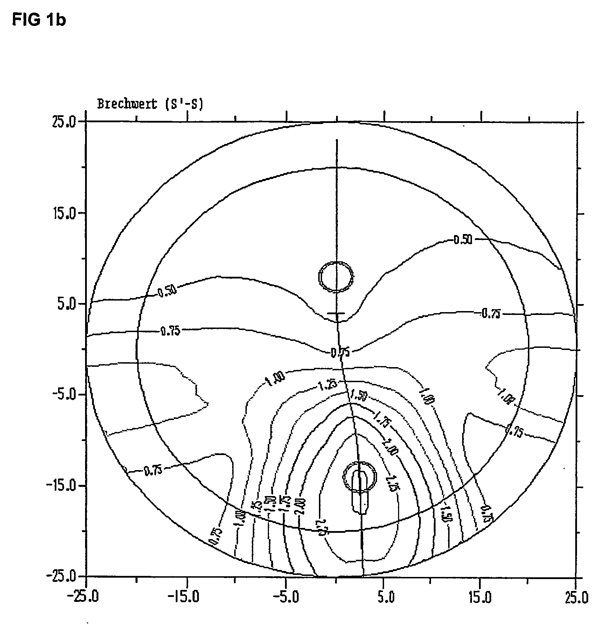

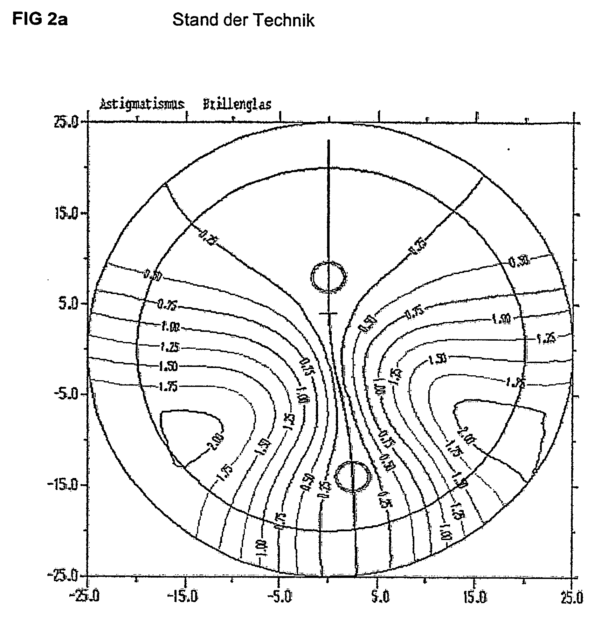

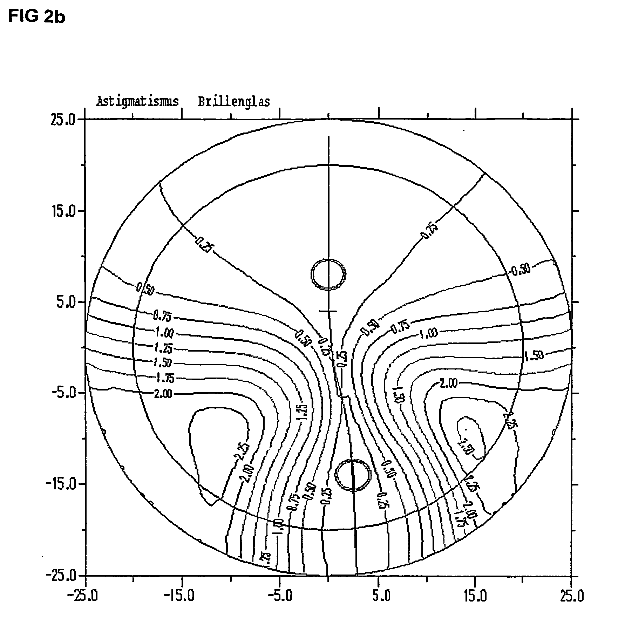

**Figur 1a** zeigt die Brechwertverteilung und **Figur 2a** die Astigmatimusverteilungverteilung eines herkömmlichen progressiven Brillenglases jeweils in Gebrauchsstellung. Bei dem Brillenglas handelt es sich um ein progressives Brillenglas der Rodenstock GmbH, welches unter dem Markennamen Multigressiv ILT vertrieben wird. **Figuren 1b** und **2b** zeigen entsprechend ein bevorzugtes Brillenglas gemäß der Erfindung mit veränderter Brechwertverteilung und überlagerten negativen und positiven Sollrefraktionsfehlern in den Bezugspunkten.

Bei dem bevorzugten erfindungsgemäßen Brillenglas wurde in dem Fernbezugspunkt, welcher in Fig. 1b durch einen oberen Kreis auf der gewundenen Hauptlinie angedeutet ist, eine negative Sollrefraktionsabweichung von 0,1 dpt eingeführt. Gleichzeitig wurde die Berechnungsaddition um 0,1 dpt gegenüber der Bestelladdition erhöht. Der Nahbezugspunkt ist durch einen unteren Kreis auf der Hauptlinie gekennzeichnet. Sowohl das herkömmliche als auch das erfindungsgemäße Brillenglas weisen eine sphärische (Bestell-)Fernwirkung von 0,50 dpt und eine (Bestell-)Addition von 2,00 dpt auf.

Aus Figur 1b ist ersichtlich, daß der Brechwert im Fembezugspunkt im Vergleich zu dem herkömmlichen Brillenglas gemäß Figur 1a kleiner ist. Wie in Figur 2b dargestellt ist, bewirkt die leicht höhere Addition bei der Erfindung einen geringfügig engeren Progressionsbereich im Vergleich zu dem herkömmlichen Brillenglas gemäß Figur 1 a. Dieser Nachteil läßt sich nicht verhindern.

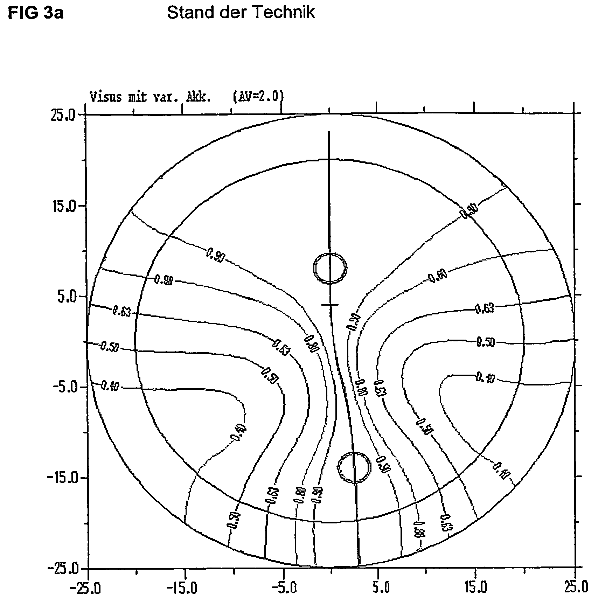

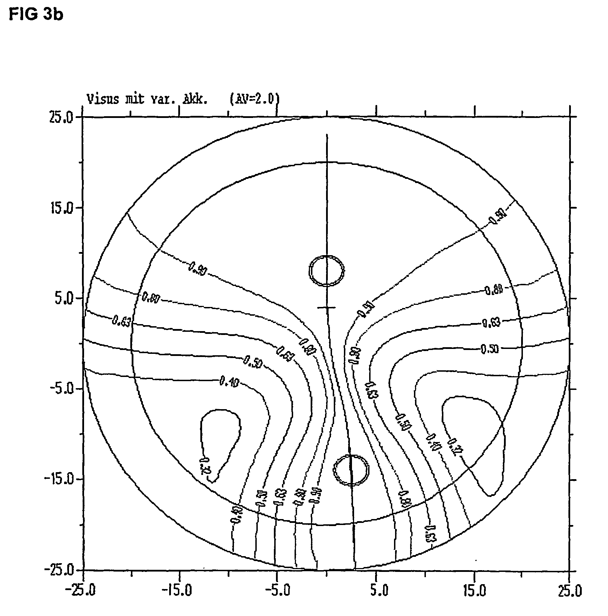

Die **Figuren 3a** (herkömmliches Brillenlas) und **3b** (bevorzugtes erfindungsgemäßes Brillenglas) zeigen jeweils die Verteilung der relativen Sehschärfenminderung durch die Abbildungsfehler (astigmatische Abweichung und Refraktionsabweichung) der in Figuren 1 und 2 dargestellten progressiven Brillengläser. Die relative Sehschärfenminderung eines Brillenträgers gibt an, wie stark die Sehschärfe eines Brillenträgers durch die Abbildungsfehler (astigmatischer Fehler und Refraktionsfehler) des Brillenglases reduziert wird. Die Isolinie in den Figuren 3a bis 5b mit z.B. 0,9 bedeutet, daß die Sehschärfe auf 90% des Ausgangsvisus des Brillenträgers herabgesetzt wird. Besitzt z.B. ein Brillenträger mit einem vollkorrigierten Brillenglas eine Sehschärfe (Visus) von 1,6, so beträgt sein Visus, wenn er an einer Stelle durch das Brillenglas schaut, bei der die Sehschärfenminderung 0,9 beträgt, nur noch 0,9*1,6, d.h. 1,44. Gleichermaßen, wenn sein Ausgangsvisus 1,25 beträgt, 1,25*0,9=1,125 oder bei einem Ausgangsvisus von 2,0 und einer Sehschärfenminderung von 0,5 nur noch 0,5*2,0=1,0. Verwiesen wird hierbei auf den Artikel von Prof. Dr. E. Hartmann, "Konsequenzen kleiner Fehlrefraktionen", Der Augenoptiker, 11/1988, Seiten 20 bis 24. Bei den Figuren 3a und 3b wurde jeweils eine optimale Korrektion angenommen, d.h. es tritt kein zusätzlicher überlagerter Refraktionsfehler auf.

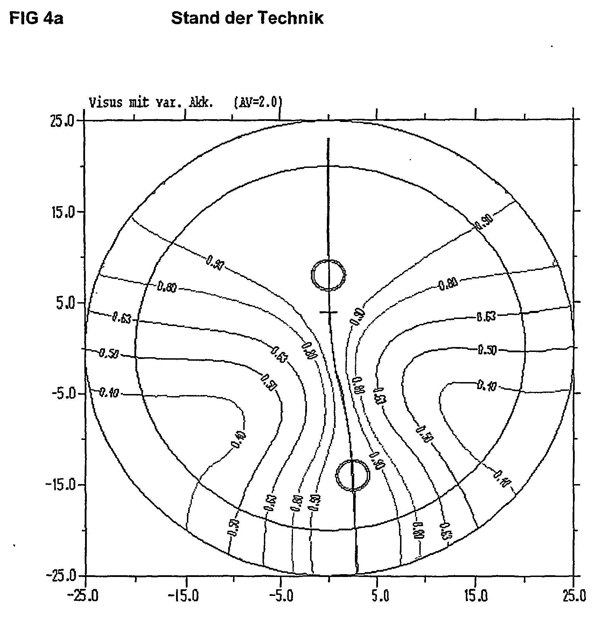

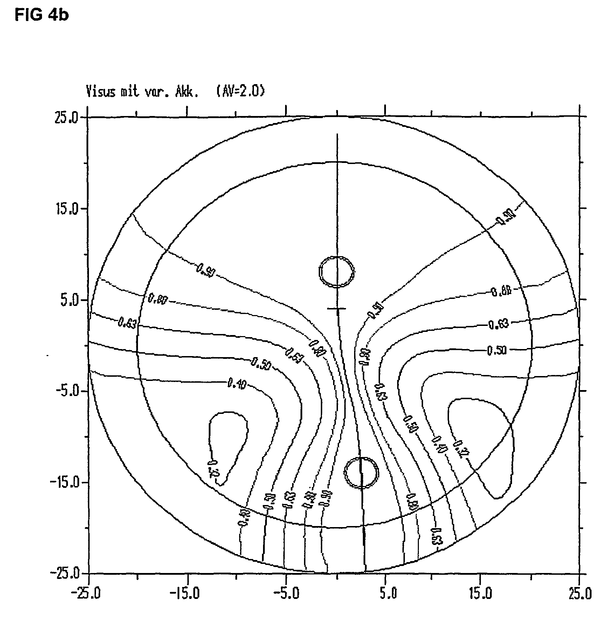

Die Figuren **4a** und **4b** zeigen jeweils die Verteilung der relativen Sehschärfenminderung, wenn ein zusätzlicher negativer Refraktionsfehler von -0,2 dpt bei den in Figs. 3 gezeigten progressiven Brillengläsern auftritt. Es sind praktisch keine Unterschiede zur optimalen Korrektion gemäß Figuren 3 zu erkennen. Aufgrund des vorhandenen Restakkommodationsvermögens können diese Fehler ausgeglichen werden.

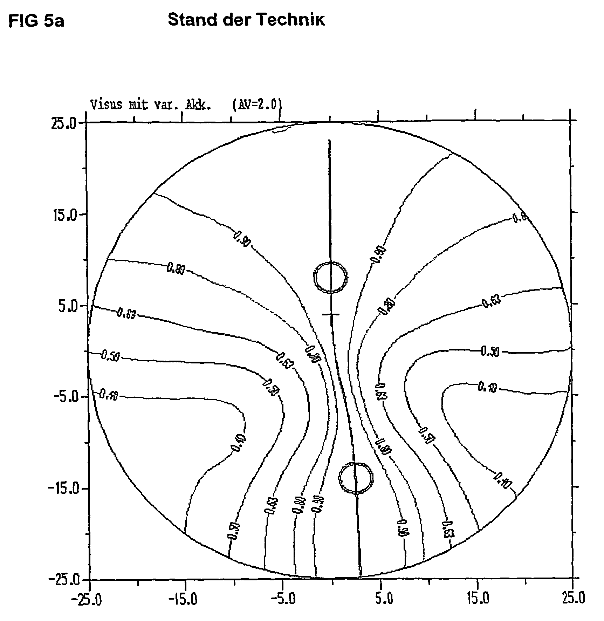

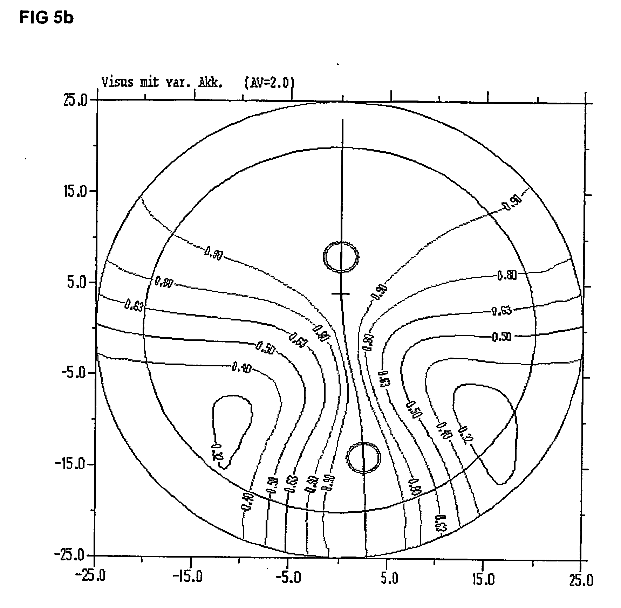

Die **Figuren 5a** und **5b** zeigen jeweils die Verteilung der relativen Sehschärfenminderung, wenn ein zusätzlicher positiver Refraktionsfehler von +0,2 dpt bei den in Figs. 3 gezeigten progressiven Brillengläsern auftritt. Figur 5b zeigt, wie unempfindlich das erfindungsgemäße Brillenglas gegenüber kleinen positiven Refraktionsfehler ist. Während sich bei dem herkömmlichen Brillenglas von Figur 5a der Fernbereich deutlich verkleinert, bleibt dieser bei dem erfindungsgemäßen Brillenglas fast unverändert. Der Fernbereich wird hierbei definiert als der Bereich innerhalb eines Halbkreises mit einem Radius von 20 mm um einen Punkt, welcher 4 mm unterhalb des Zentrierpunktes (dargestellt in Figur 5 durch ein Kreuz) liegt, und oberhalb einer Horizontalen, die durch diesen Punkt geht und dessen relative Sehschärfe mehr als 0,9 dpt beträgt.

Die erfindungsgemäße Überlagerung vorbestimmter Sollrefraktionsabweichungen ist natürlich nur begrenzt möglich. So ist bereits aus den Figuren 2 und 3 ersichtlich, daß der Progressionsbereich durch die Additionserhöhung geringfügig kleiner wird. Weiterhin ist selbstverständlich zu beachten, daß hinsichtlich des zusätzlichen Refraktionsfehlers - beispielsweise aufgrund von Fertigungsschwankungen - auch der "umgekehrte Fall" auftreten kann. Beispielsweise kann die Refraktionsbestimmung tatsächlich für unendliche Sehprobenentfernungen durchgeführt werden, das Brillenglas aber nachfolgend lediglich in einem geschlossenen Raum benutzt werden. In diesem Fall weist das Brillenglas schon in der Ferne einen negativen Refraktionsfehler von 0,1 bis 0,2 dpt auf, wobei aufgrund von Meßungenauigkeiten nochmals 0,12 dpt hinzukommen können. Überlagert man ein solches Brillenglas mit einer negativen Sollrefraktionsabweichung im Fernbezugspunkt, kann dies zu Unverträglichkeiten führen, insbesondere bei höheren Additionen aufgrund des fehlenden Akkommodationsvermögens. Vorzugsweise sollte sich daher die eingeführte Sollrefraktionsüberlagerung zwischen 0,03 und 0,2 dpt, vorzugsweise zwischen 0,08 und 0,12 dpt, im Fernbezugspunkt bewegen.

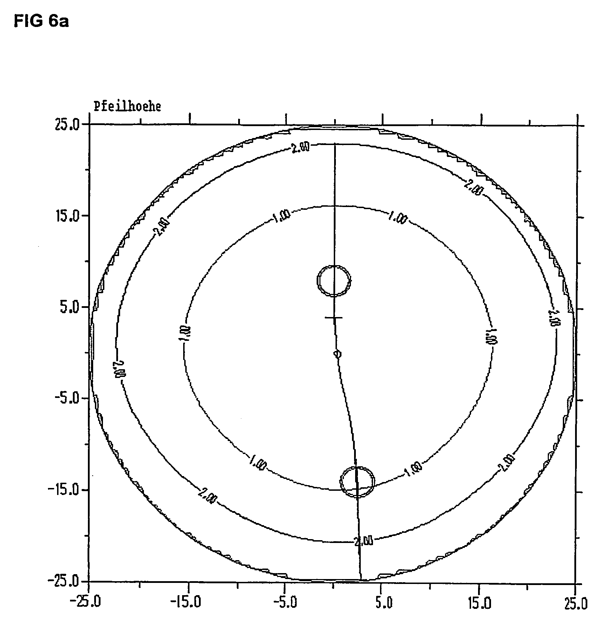

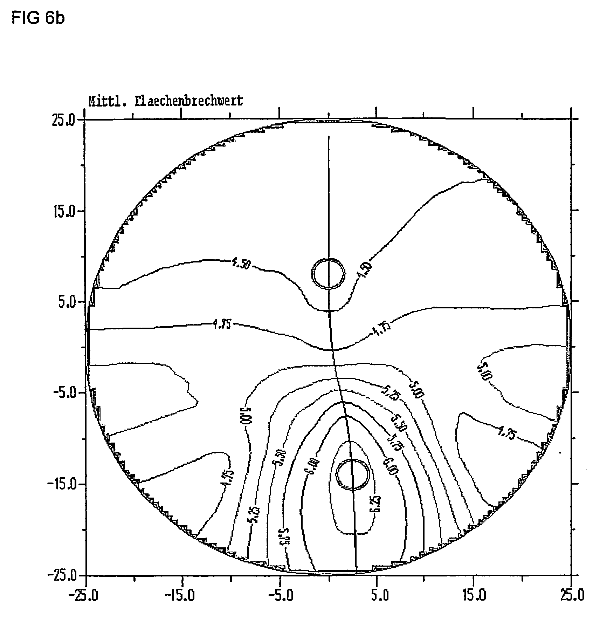

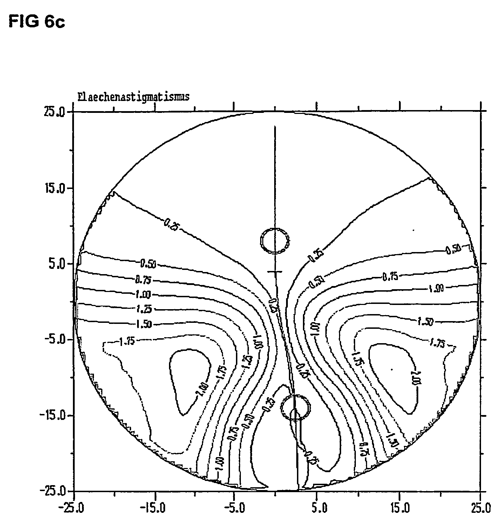

Die **Figuren 6a**, **b** und **c** zeigen die Pfeilhöhen, den mittleren Flächenbrechwert und den Flächenastigmatismus des zuvor beschriebenen bevorzugten erfindungsgemäßen Brillenglases.

**Tabelle 1**

| Add /Sph | 1,0 | | | 2,0 | | | 3,0 | | |
|---|---|---|---|---|---|---|---|---|---|
| | BF | BZ | BN | BF | BZ | BN | BF | BZ | BN |
| - 4 | -4,01 | -4,01 | -3,00 | -4,01 | -3,96 | -2,01 | -4,0 | -3,93 | -1,01 |
| -1 | -1 | -1 | -0,01 | -1,02 | -0,97 | 0,99 | -1,01 | -0,93 | 1,98 |
| 2 | 1,99 | 2,0 | 2,99 | 1,99 | 2,04 | 3,99 | 2,0 | 2,08 | 4,99 |
| 5 | 4,98 | 4,99 | 6,0 | 4,99 | 5,04 | 6,99 | 5,0 | 5,08 | 7,99 |

**Tabelle 2**

| Add /Sph | 1,0 | | | 2,0 | | | 3,0 | | |
|---|---|---|---|---|---|---|---|---|---|
| | BF | BZ | BN | BF | BZ | BN | BF | BZ | BN |
| -1 | -1,0 | -0,99 | -0,02 | -1,0 | -0,94 | 0,96 | -0,98 | -0,88 | 1,93 |
| 2 | 2,0 | 2,01 | 2,97 | 2,0 | 2,08 | 3,95 | 2,02 | 2,13 | 4,93 |

**Tabelle 3**

| Add /Sph | 1,0 | | | 2,0 | | | 3,0 | | |
|---|---|---|---|---|---|---|---|---|---|
| | BF | BZ | BN | BF | BZ | BN | BF | BZ | BN |
| -4 | -4,01 | -4,01 | -3,04 | -3,99 | -3,91 | -2,11 | -3,97 | -3,85 | -1,15 |
| -1 | -0,99 | -0,98 | -0,04 | -0,98 | -0,9 | 0,92 | -0,95 | -0,82 | 1,86 |
| 2 | 2,01 | 2,02 | 2,95 | 2,03 | 2,14 | 3,88 | 2,07 | 2,21 | 4,82 |
| 5 | 5,0 | 5,03 | 5,91 | 5,03 | 5,17 | 6,84 | 5,08 | 5,26 | 7,75 |

**Patentansprüche**

1. Verfahren zur Herstellung eines progressiven Brillenglases umfassend folgende Schritte:

- Vorgeben eines Bestellwertes für den mittleren Gebrauchswert im Fernbezugspunkt des progressiven Brillenglases;

- Berechnen des progressiven Brillenglases unter Berücksichtigung eines Berechnungswertes des mittleren Gebrauchswertes in dem Fernbezugspunkt, wobei der Berechnungswert gegenüber dem Bestellwert in dem Fernbezugspunkt eine negative Sollrefraktionsabweichung zwischen 0,03 dpt und 0,2 dpt aufweist; und
- Herstellen des berechneten progressiven Brillenglases.

2. Verfahren nach Anspruch 1, wobei die negative Refraktionsabweichung zwischen 0,08 dpt und 0,12 dpt liegt.

3. Verfahren nach Anspruch 1 oder 2, wobei der Schritt des Berechnens des progressiven Brillenglases unter Berücksichtigung einer Berechnungsaddition erfolgt, welche zumindest um den Betrag der negativen Sollrefraktionsabweichung in dem Fernbezugspunkt gegenüber der Bestelladdition erhöht ist.

4. Verfahren nach Anpruch 3, wobei die Berechnungsaddition gegenüber der Bestelladdition um die Summe

• des Betrags der negativen Sollrefraktionsabweichung in dem Fernbezugspunkt und
• einer positiven Sollrefraktionsabweichung zwischen 0,02 dpt bis 0,1 dpt erhöht ist.

5. Verfahren nach Anspruch 4, wobei die positive Sollrefrationsabweichung ungefähr 0,05 dpt beträgt.

6. Verfahren nach einem der vorangegangenen Ansprüche, wobei der Schritt des Berechnens des progressiven Brillenglases unter Berücksichtigung eines vorbestimmten Sollrefraktionsfehlers auf der Hauptlinie als Funktion der y-Koordinate entlang eines Vertikalschnitts des Brillenglases erfolgt.

7. Verfahren nach einem der vorangegangenen Ansprüche, wobei der Schritt des Berechnens des progressiven Brillenglases derart erfolgt, daß der mittlere Gebrauchswert des hergestellten Brillenglases bei horizontaler Blickauslenkung im Fernbereich möglichst wenig zunimmt.

8. Verfahren nach Anspruch 7, wobei der Schritt des Berechnens des progressiven Brillenglases derart erfolgt, daß der mittlere Gebrauchswert des hergestellten Brillenglases auf Höhe des Fernbezugspunktes bei horizontaler Blickauslenkung um weniger als 0,25 dpt, bevorzugt weniger als 0,15 dpt, gegenüber dem mittleren Gebrauchswert im Fernbezugspunkt zunimmt.

## Claims

1. Method for producing a progressive spectacle lens, comprising the steps of:

- defining an ordering value for the average use value at the far reference point of the progressive spectacle lens;
- calculating the progressive spectacle lens while allowing for a calculation value of the average use value at the far reference point, the calculation value having a negative desired refraction deviation of between 0.03 dpt and 0.2 dpt from the ordering value at the far reference point; and
- producing the progressive spectacle lens as calculated.

2. Method according to claim 1, wherein the negative refraction deviation is between 0.08 dpt and 0.12 dpt.

3. Method according to either claim 1 or claim 2, wherein the step of calculating the progressive spectacle lens takes place while allowing for a calculation addition, which is increased at least by the value of the negative desired refraction deviation at the far reference point with respect to the ordering addition.

4. Method according to claim 3, wherein the calculation addition is increased relative to the ordering addition by the sum of

• the value of the negative desired refraction deviation at the far reference point and
• a positive desired refraction deviation between 0.02 dpt to 0.1 dpt.

5. Method according to claim 4, wherein the positive desired refraction deviation is approximately 0.05 dpt.

6. Method according to any one of the preceding claims, wherein the step of calculating the progressive spectacle lens takes place while allowing for a predetermined desired refraction error on the main line as a function of the y-

**EP 1 658 522 B1**

coordinate along a vertical section of the spectacle lens.

**7.** Method according to any one of the preceding claims, wherein the step of calculating the progressive spectacle lens takes place in such a way that the average use value of the produced spectacle lens increases as little as possible in the case of a horizontal viewing deflection in the far zone.

**8.** Method according to claim 7, wherein the step of calculating the progressive spectacle lens takes place in such a way that the average use value of the produced spectacle lens, at the height of the far reference point in the case of a horizontal viewing deflection, increases by less than 0.25 dpt, preferably less than 0.15 dpt, relative to the average use value at the far reference point.

**Revendications**

**1.** Procédé de fabrication d'un verre de lunettes progressif comprenant les étapes suivantes :

- indication d'une valeur de commande pour la valeur d'utilisation moyenne dans le point de référence éloigné du verre de lunettes progressif ;
- calcul du verre de lunettes progressif en tenant compte d'une valeur de calcul de la valeur d'utilisation moyenne dans le point de référence éloigné, la valeur de calcul présentant, par rapport à la valeur de commande dans le point de référence éloigné, un écart de réfraction théorique compris entre 0,03 dpt et 0,2 dpt ; et
- fabrication du verre de lunettes progressif calculé.

**2.** Procédé selon la revendication 1, l'écart de réfraction négatif étant de 0,08 dpt à 0,12 dpt.

**3.** Procédé selon les revendications 1 ou 2, l'étape de calcul du verre de lunettes progressif étant réalisée en tenant compte d'une addition, laquelle est augmentée au moins du montant de l'écart de réfraction théorique négatif dans le point de référence éloigné par rapport à l'addition de commande.

**4.** Procédé selon la revendication 3, l'addition, par rapport à l'addition de commande, étant augmentée

- du montant de l'écart de réfraction théorique négatif dans le point de référence éloigné et
- d'un écart de réfraction de référence théorique positif compris entre 0,02 dpt et 0,1 dpt.

**5.** Procédé selon la revendication 4, l'écart de réfraction théorique positif étant d'environ 0,05 dpt.

**6.** Procédé selon l'une des revendications précédentes, l'étape de calcul du verre de lunettes progressif étant réalisée sur la ligne principale comme fonction du coordonné y le long d'une coupe verticale du verre de lunettes en tenant compte d'une erreur de réfraction théorique prédéterminée.

**7.** Procédé selon l'une des revendications précédentes, l'étape de calcul du verre de lunettes progressif étant réalisée de telle manière que la valeur d'utilisation moyenne du verre de lunettes fabriqué augmente le moins possible en cas de déviation visuelle horizontale dans la zone éloignée.

**8.** Procédé selon la revendication 7, l'étape de calcul du verre de lunettes progressif étant réalisée de telle manière que la valeur d'utilisation moyenne du verre de lunette fabriqué augmente à hauteur du point de référence éloigné en cas de déviation visuelle horizontale de moins de 0,25 dpt, de préférence moins de 0,15 dpt, par rapport à la valeur d'utilisation moyenne dans le point de référence éloigné.

**FIG 1a**          **Stand der Technik**

**FIG 1b**

Brechwert (S'-S)

**FIG 2a**          Stand der Technik

## FIG 2b

Astigmatismus Brillenglas

**FIG 3a**          Stand der Technik

Visus mit var. Akk.   (AV=2.0)

**FIG 3b**

**FIG 4a**          **Stand der Technik**

Visus mit var. Akk.   (AV=2.0)

**FIG 4b**

Visus mit var. Akk. (AV=2.0)

**FIG 5a**        **Stand der Technik**

Visus mit var. Akk. (AV=2.0)

**FIG 5b**

**FIG 6a**

FIG 6b

**FIG 6c**

Flaechenastigmatismus

**FIG 7**

**FIG 8**

**FIG 9**

FIG 10

FIG 11

FIG 12

**EP 1 658 522 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0181981 A
- EP 0911670 B1
- EP 0911670 A
- WO 0191981 A
- DE 10250093

**In der Beschreibung aufgeführte Nicht-Patentliteratur**

- **PROF. DR. E. HARTMANN.** Konsequenzen kleiner Fehlrefraktionen. *Der Augenoptiker,* November 1988, 20-24